# FASCICULE DE BREVET EUROPEEN

(11) **EP 0 661 530 B1**
(45) Date de publication et mention de la délivrance du brevet: **04.03.1998**
(21) Numéro de dépôt: 94403016.2
(22) Date de dépôt: 26.12.1994
(51) Int. Cl.: G01N 1/44, H05B 6/80

(54) **Appareil de traitement en milieu humide simultanément sur une pluralité d'échantillons et utilisation dudit appareil**
Vorrichtung zur gleichzeitigen Nassbehandlung von mehreren Proben und ihre Verwendung
Apparatus for the simultaneous wet processing of a plurality of samples, and use of the apparatus

(30) Priorité: 28.12.1993 FR 9315735
(43) Date de publication de la demande: 05.07.1995
(73) Titulaire: SOCIETE PROLABO, 94120 Fontenay-sous-Bois (FR)
(72) Inventeur: Jacquault, Patrick, F-92310 Sevres (FR)
(74) Mandataire: Martin, Jean-Jacques

(56) Documents cités:
- EP-A- 0 496 684

## Description

La présente invention concerne un appareil pour réaliser un traitement en milieu humide simultanément sur une pluralité d'échantillons, l'appareil mettant en oeuvre un chauffage par micro-ondes des échantillons.

Une application particulièrement avantageuse de l'invention est son utilisation pour réaliser sur différents produits des extractions par chauffage micro-ondes de composés spécifiques, telle que par exemple l'extraction de polluants dans des sédiments.

L'invention concerne un perfectionnement de l'appareil décrit dans la demande de brevet français FR-2 681 431 appartenant à la Demanderesse, cet appareil comportant des moyens pour émettre des micro-ondes dans une cavité d'application des micro-ondes de forme cylindrique.

Plus particulièrement, la cavité d'application d'axe central de symètrie X, comporte sur sa paroi supérieure quatre puits de forme cylindrique débouchant à l'intérieur de la cavité par des ouvertures circulaires. Des matras ou éprouvettes contenant les échantillons sont introduits via les ouvertures à l'intérieur de la cavité d'application des micro-ondes. En outre, cette cavité d'application comporte des déflecteurs dont le but est de mieux répartir les micro-ondes à l'intérieur de la cavité. Ces déflecteurs sont réalisés en matériaux non perméables aux micro-ondes.

Selon un premier mode de réalisation de l'appareil décrit dans la demande de brevet français précitée, les déflecteurs sont sensiblement plans et rectangulaires, l'axe X de la cavité d'application étant situé dans leurs plans, ils sont disposés radialement et régulièrement répartis entre les matras.

Selon un deuxième mode de réalisation, les déflecteurs sont formés de surfaces cylindriques de génératrices parallèles à l'axe X de la cavité, et solidaires de la paroi latérale de la cavité d'application. Ils sont disposés symétriquement par rapport à un plan de symètrie contenant l'axe X de la cavité et l'axe Y du guide d'ondes perpendiculaire audit axe X de telle sorte que d'un même côté du plan de symètrie ces déflecteurs sont disposés de façon que la face concave d'un déflecteur soit en regard de la face convexe d'un déflecteur adjacent. La face concave des déflecteurs est tournée vers l'ouverture du guide d'ondes dans la paroi latérale de la cavité d'application.

Selon un troisième mode de réalisation, les déflecteurs sont constitués chacun par une paroi cylindrique de génératrice parallèle à l'axe X de la cavité d'application, cette paroi cylindrique enveloppant sensiblement chaque matras est ouverte vers le centre de la cavité. Deux déflecteurs adjacents sont réunis par une paroi de liaison. L'espace compris entre les déflecteurs et les parois de liaison, et la paroi latérale de la cavité d'application est de préférence comblé par un matériau imperméable aux micro-ondes et de préférence isolant-thermique.

Lors de l'utilisation de cet appareil, il s'avère qu'aucune disposition précitée des déflecteurs n'est satisfaisante.

En particulier, ces modes de réalisation ne permettent pas de répartir de façon uniforme le champ électrique des micro-ondes dans toute la cavité, et celui-ci est concentré en certains points particuliers, appelés impacts, de la surface des matras constitués généralement en verre de telle sorte qu'il provoque des phénomènes de fusion et/ou de fissuration du verre qui entraînent la détérioration des matras.

En outre, la dernière disposition particulière précitée des déflecteurs est complexe et représente un coût de réalisation trop élevé pour une fabrication en série d'un tel appareil.

Afin de pallier ces inconvénients, l'invention propose un appareil dans lequel la forme et le positionnement des déflecteurs dans la cavité d'application des micro-ondes est optimisée de façon à protéger les zones de surface des matras exposées aux impacts, tout en étant simple et facile à mettre en oeuvre.

Plus précisément, l'invention propose un appareil pour réaliser un traitement en milieu humide simultanément sur quatre échantillons contenus dans quatre matras respectivement d'axes X₁, X₂, X₃, X₄, l'appareil comprenant d'une part des moyens pour émettre des micro-ondes à l'intérieur d'une cavité d'application d'axe central de symètrie X, la cavité d'application comportant dans sa paroi suspérieure quatre ouvertures pour l'introduction des matras à l'intérieur de ladite cavité, parallèlement à l'axe X, disposés deux à deux de manière symétriquement opposée par rapport à l'axe X, et d'autre part quatre déflecteurs de micro-ondes placés à l'intérieur de la cavité d'application. L'appareil est caractérisé en ce que chaque déflecteur est formé d'une surface cylindrique qui enveloppe une partie de la surface latérale extérieure d'un matras comprise entre un quart et un demi, et en ce que les déflecteurs sont deux à deux disposés symétriquement par rapport à l'axe X et pour la majeure partie de part et d'autre d'un plan contenant l'axe X et les deux axes des matras correspondants, les quatres déflecteurs présentant des concavités alternées.

La description qui va suivre en regard des dessins annexés, donnés à titre d'exemples non limitatifs, fera bien comprendre en quoi consiste l'invention et comment elle peut être réalisée.
- La figure 1 est une vue en coupe de la cavité d'application des micro-ondes d'un appareil selon l'invention.
- La figure 2 est une vue en coupe selon le plan B-B de la cavité de la figure 1.

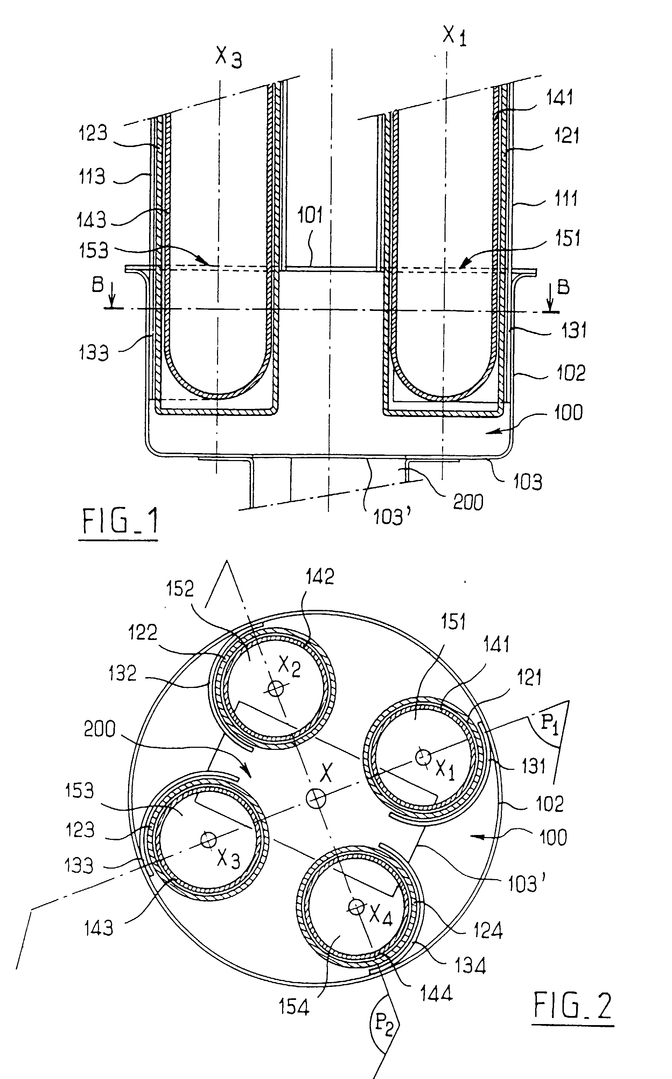

Sur les figures 1 et 2, on a représenté une cavité d'application 100 de micro-ondes qui fait partie d'un appareil pour réaliser un traitement en milieu humide simultanément sur quatre échantillons contenus dans quatre matras, l'appareil mettant en oeuvre un chauffage par micro-ondes des échantillons. Un tel appareil est décrit structurellement et fonctionnellement dans son ensemble dans la demande de brevet français FR-2 681 431 appartenant à la Demanderesse. Par conséquent, l'ensemble de l'appareil ne sera pas ici redécrit et la présente description ne porte en détail que sur un mode de réalisation particulier de la cavité d'application perfectionnée.

La cavité d'application 100 ici représentée est de forme cylindrique d'axe central de symétrie X et comporte une paroi supérieure 101, une paroi latérale 102 et une paroi inférieure 103. La paroi inférieure 103 de la cavité d'application 100 comporte une fenêtre rectangulaire 103' transparente aux micro-ondes, par laquelle un guide d'ondes 200 perpendiculaire à la paroi inférieure 103 débouche à l'intérieur de ladite cavité. Ce guide d'ondes 200 est raccordé à un générateur de micro-ondes ici non représenté et transporte les micro-ondes jusqu'à la cavité d'application.

Comme on peut mieux le voir sur la figure 1, l'axe du guide d'ondes 200 correspond à l'axe de symétrie X de la cavité. La paroi supérieure 101 de la cavité d'application 100 comporte quatres ouvertures circulaires 151, 152, 153, 154 disposées deux à deux de manière symétriquement opposée par rapport à l'axe X de telle manière que les centres desdites ouvertures sont positionnés deux à deux de part et d'autre de la fenêtre 103' le long des plus grands côtés de cette dernière. Par ailleurs, la cavité d'application 100 porte à l'extérieur sur sa paroi supérieure 101 quatre puits cylindriques identiques dont deux ici sont représentés. Chaque puit cylindrique 111, 113 s'étend vers l'extérieur de la cavité, perpendiculairement à la paroi supérieure 101, à partir de chaque ouverture circulaire 151, 153 prévue dans ladite paroi supérieure 101.La section de chaque puit 111, 113 correspond à la section de chaque ouverture 151, 153 et la hauteur de chaque puit est telle qu'il forme une barrière d'absorption aux micro-ondes afin d'éviter leur propagation vers l'extérieur de la cavité d'application. Les axes X₁, X₂, X₃, X₄ verticaux des puits cylindriques sont parallèles à l'axe X et passent par les centres des ouvertures 151, 152, 153, 154.

Par ailleurs, les échantillons à traiter ici non représentés sont contenus dans quatre matras 141, 142, 143, 144 en verre. Les matras 141, 142, 143, 144 sont eux-mêmes positionnés dans des doigts de gant 121, 122, 123, 124 cylindriques de protection réalisés en un matériau perméable aux micro-ondes. La section de chaque doigt de gant est telle que la surface latérale cylindrique extérieure de chaque matras est positionnée contre la surface latérale intérieure cylindrique de chaque doigt de gant. Chaque ensemble, doigts de gant et matras associé, est introduit verticalement dans chaque puit vers la cavité d'application 100, via les ouvertures 151, 152, 153, 154 de telle sorte qu'une partie du matras baigne dans ladite cavité. Lorsque les matras et les doigts de gant sont positionnés dans les puits, les axes X₁, X₂, X₃, X₄ des puits correspondent aux axes desdits matras.

Il convient de préciser que la hauteur des matras dans la cavité d'application 100 par rapport à sa paroi inférieure 103 est déterminée expérimentalement de façon à obtenir le temps de minéralisation des échantillons le plus performant. Il est bien évident que les échantillons ici non représentés sont placés dans la partie de matras qui baigne dans la cavité. En outre, les matras sont situés à une certaine distance du fond des doigts de gant. Cette distance est également déterminée expérimentalement en fonction du temps de minéralisation des échantillons.

Par ailleurs, on distingue plus particulièrement sur la figure 2, quatre déflecteurs 131, 132, 133, 134 identiques, placés dans la cavité d'application 100. Ces déflecteurs 131, 132, 133, 134 sont réalisés en un matériau réfléchissant non perméable aux micro-ondes, tel qu'un matériau métallique. Chaque déflecteur 131, 132, 133, 134 est formé d'une surface cylindrique placée ici contre la surface extérieure cylindrique de chaque doigt de gant 121, 122, 123, 124 de manière à envelopper une partie de la surface latérale extérieure de chaque matras 141, 142, 143, 144 comprise entre un quart et un demi. Suivant cette disposition, il n'y a pratiquement pas d'espace vide entre chaque déflecteur et chaque partie de surface de matras enveloppée. Chaque déflecteur est concentrique à chaque doigt de gant et chaque matras associé. Les déflecteurs sont disposés deux à deux symétriquement opposés par rapport à l'axe X. De plus, chaque paire de déflecteurs symétriquement opposée est disposée pour la majeure partie de part et d'autre d'un plan contenant l'axe X et les deux axes des matras correspondants. Les quatre déflecteurs positionnés présentent des concavités alternées. Plus précisément, les deux déflecteurs 131, 133 symètriques par rapport à l'axe X sont placés pour la majeure partie de part et d'autre du plan P₁ qui contient l'axe X et les axes X₁, X₃ des matras 141, 143. Les deux déflecteurs 132, 134 symètriques par rapport à l'axe X sont positionnés pour la majeure partie de part et d'autre du plan P₂ qui contient l'axe X et les axes X₂, X₄ des matras 142, 144. Les plans P₁, P₂ sont perpendiculaires entre-eux.

On entend par "pour la majeure partie", comme le montre la figure 2, pratiquement toute la longueur de chaque déflecteur située d'un côté d'un plan P₁ ou P₂.

Il convient de préciser que chaque déflecteur 131, 132, 133, 134 est positionné de telle sorte qu'il comporte une portion d'extrémité qui s'étend au-dessus d'une région d'angle de la surface de la fenêtre rectangulaire 103'. Dans le mode de réalisation représenté, chaque déflecteur 131, 132, 133, 134 s'étend à cheval sur un des plus petits côtés de la fenêtre 103' à proximité d'une médiatrice ( ici non représentée ) de la fenêtre rectangulaire 103'.

Comme le montre mieux la figure 1, chaque déflecteur 131, 133 s'étend sur toute la hauteur du matras correspondant 141, 143 se trouvant à l'intérieur de la cavité d'application 100. Ainsi la disposition des déflecteurs est déterminée expérimentalement pour envelopper, et donc protéger, les zones surfaciques des matras et des doigts de gant exposées aux impacts dûs à une concentration du champ électrique des micro-ondes à l'intérieur de la cavité, tout en permettant un chauffage suffisant des échantillons pour obtenir des temps de minéralisation performants.

Il convient de préciser que selon le mode de réalisation représenté, chaque déflecteur vient de formation avec chaque puit et constitue un prolongement d'une partie de la paroi cylindrique du puit vers l'intérieur de la cavité d'application.

Selon un autre mode de réalisation ici non représenté, on peut envisager que chaque déflecteur constitue une pièce indépendante soudée à la paroi supérieure de la cavité d'application, à proximité immédiate de chaque doigt de gant et du matras associé, donc à proximité du bord de chaque ouverture de la paroi supérieure de la cavité

Selon ce mode de réalisation, il se peut que chaque déflecteur ne soit pas placé contre la surface extérieure du doigt de gant correspondant. Dans ce cas, la distance entre chaque doigt de gant et chaque déflecteur est déterminée expérimentalement pour être telle qu'il n'y ait aucun risque d'impact sur le matras.

## Revendications

1. Appareil pour réaliser un traitement en milieu humide simultanément sur quatre échantillons contenus dans quatre matras (141, 142, 143, 144) respectivement d'axes X₁, X₂, X₃, X₄, l'appareil comprenant d'une part des moyens (200) pour émettre des micro-ondes à l'intérieur d'une cavité d'application (100) d'axe central de symètrie X, la cavité d'application (100) comportant dans sa paroi supérieure (101) quatre ouvertures (151, 152, 153, 154) pour l'introduction des matras (141, 142, 143, 144) à l'intérieur de ladite cavité, parallèlement à l'axe X, disposés deux à deux de manière symétriquement opposée par rapport à l'axe X, et d'autre part quatre déflecteurs (131, 132, 133, 134) de micro-ondes placés à l'intérieur de la cavité d'application (100), caractérisé en ce que chaque déflecteur (131, 132, 133, 134) est formé d'une surface cylindrique qui enveloppe une partie de la surface latérale extérieure d'un matras (141, 142, 143, 144) comprise entre un quart et un demi, et en ce que les déflecteurs (131, 132, 133, 134) sont deux à deux disposés symétriquement par rapport à l'axe X et pour la majeure partie de part et d'autre d'un plan (P₁, P₂) contenant l'axe X et les deux axes des matras correspondants, les quatre déflecteurs (131, 132, 133, 134) présentant des concavités alternées.

2. Appareil selon la revendication 1, caractérisé en ce que chaque déflecteur (131, 132, 133, 134) s'étend sur toute la hauteur du matras (141, 142, 143, 144) située à l'intérieur de la cavité d'application (100).

3. Appareil selon l'une des revendications 1 ou 2, caractérisé en ce que chaque déflecteur (131, 132, 133, 134) est situé à proximité immédiate du matras (141, 142, 143, 144) qu'il enveloppe.

4. Appareil selon l'une quelconque des revendications 1 à 3, caractérisé en ce qu'il comporte quatre doigts de gant (121, 122, 123, 124) de protection réalisés en un matériau perméable aux micro-ondes, chaque doigt de gant (121, 122, 123, 124) étant destiné à contenir un matras (141, 142, 143, 144) et introduit à l'intérieur de la cavité d'application (100) via chaque ouverture (151, 152, 153, 154) de sa surface supérieure (101) de telle sorte que chaque déflecteur (131, 132, 133, 134) enveloppe également la surface latérale extérieure correspondante de chaque doigt de gant (121, 122, 123, 124).

5. Appareil selon l'une quelconque des revendications 1 à 4, dans lequel chaque ouverture (151, 152, 153, 154) de la surface supérieure (101) de la cavité d'application est pourvue d'un puit (110, 113) de forme cylindrique qui se prolonge vers l'extérieur de la cavité et qui comporte une section égale à celle du passage de ladite ouverture, formant une barrière d'absorption aux micro-ondes, caractérisé en ce que chaque déflecteur (131, 132, 133, 134) vient de formation avec chaque puit (111, 113) et constitue un prolongement vers l'intérieur de la cavité d'application d'une partie de la paroi latérale cylindrique de chaque puit.

6. Appareil selon l'une quelconque des revendications 1 à 4, caractérisé en ce que chaque déflecteur (131, 132, 133, 134) est soudé en partie supérieure à la paroi supérieure (101) de la cavité d'application (100) à proximité immédiate du bord de chaque ouverture (151, 152, 153, 154).

7. Appareil selon l'une quelconque des revendications 1 à 6, caractérisé en ce que chaque déflecteur est concentrique à chaque matras.

8. Appareil selon l'une quelconque des revendications 1 à 7, caractérisé en ce qu'il est prévu dans la paroi inférieure (103) de la cavité d'application (100) un fenêtre rectangulaire (103') transparente aux micro-ondes par laquelle s'effectue l'émission des micro-ondes à l'intérieur de la cavité d'application (100), les centres des quatres ouvertures circulaires (151,152,153,154) de ladite cavité d'application (100) étant positionnés deux à deux de part et d'autre de la fenêtre (103') le long des plus grands côtés de cette dernière et chacun desdits déflecteurs (131,132,133,134) comportant une portion d'extrémité qui s'étend au-dessus de la surface de ladite fenêtre (103').

## Patentansprüche

1. Vorrichtung zum Durchführen einer gleichzeitigen Naßbehandlung von vier Proben, welche in vier Kolben (141, 142, 143, 144) mit Achsen X₁, X₂, X₃ bzw. X₄ enthalten sind, welche einerseits eine Einrichtung (200) zum Emittieren von Mikrowellen in das Innere eines Anwendungshohlraums (100) mit einer zentralen Symmetrieachse X, wobei der Anwendungshohlraum (100) in seiner oberen Wand (101) vier Öffnungen (151, 152, 153, 154) zum Einführen der Kolben (141, 142, 143, 144) in das Innere des Hohlraums parallel zu der Achse X aufweist, die paarweise bezüglich der Achse X symmetrisch einander gegenüberliegend angeordnet sind, und anderseits vier Ablenkelemente (131, 132, 133, 134) für Mikrowellen aufweist, welche im Inneren des Anwendungshohlraums (100) angeordnet sind, dadurch gekennzeichnet, daß jedes Ablenkelement (131, 132, 133, 134) mit einer zylindrischen Oberfläche ausgebildet ist, welche einen Abschnitt der seitlichen äußeren Oberfläche eines Kolbens (141, 142, 143, 144) umgibt, der zwischen einem Viertel und einer Hälfte liegt, und daß die Ablenkelelemente (131, 132, 133, 134) paarweise symmetrisch bezüglich der Achse X und zum überwiegenden Teil auf verschiedenen Seiten einer Ebene (P₁, P₂) angeordnet sind, welche die Achse X und die zwei Achsen der entsprechenden Kolben enthält, wobei die vier Ablenkelemente (131, 132, 133, 134) alternierende Konkavbereiche aufweisen.

2. Vorrichtung nach Anspruch 1, dadurch gekennzeichnet, daß jedes Ablenkelement (131, 132, 133, 134) sich über die gesamte Höhe des Kolbens (141, 142, 143, 144) erstreckt, die sich innerhalb des Anwendungshohlraums (100) befindet.

3. Vorrichtung nach einem der Ansprüche 1 oder 2, dadurch gekennzeichnet, daß jedes Ablenkelement (131, 132, 133, 134) sich in der unmittelbaren Nachbarschaft des Kolbens (141, 142, 143, 144) befindet, den es umgibt.

4. Vorrichtung nach einem der Ansprüche 1 bis 3, dadurch gekennzeichnet, daß sie vier Schutzfingerlinge (121, 122, 123, 124) aufweist, die aus einem für Mikrowellen durchlässigen Material hergestellt sind, wobei jeder Fingerling (121, 122, 123, 124) dafür vorgesehen ist, einen Kolben (141, 142, 143, 144) aufzunehmen, und in das Innere des Anwendungshohlraums (100) über die jeweilige Öffnung (151, 152, 153, 154) in deren Oberfläche (101) derart eingeführt ist, daß jedes Ablenkelement (131, 132, 133, 134) die entsprechende seitliche Außenfläche jedes Fingerlings (121, 122, 123, 124) gleichfalls umgibt.

5. Vorrichtung nach einem Ansprüche 1 bis 4, bei dem jede Öffnung (151, 152, 153, 154) in der oberen Oberfläche (101) des Anwendungshohlraums mit einem Schacht (110, 113) mit zylindrischer Form versehen ist, der sich bezüglich des Hohlraums nach außen erstreckt und einen Querschnitt gleich demjenigen des Durchlasses der besagten Öffnung aufweist und eine Absorptionsbarriere für die Mikrowellen bildet, dadurch gekennzeichnet, daß jedes Ablenkelement (131, 132, 133, 134) zusammen mit jeweils einem der Schächte (111, 113) ausgebildet ist und eine Verlängerung eines Teils der zylindrischen Seitenwand jedes Schachts in das Innere des Anwendungshohlraums bildet.

6. Vorrichtung nach einem der Ansprüche 1 bis 4, dadurch gekennzeichnet, daß jedes Ablenkelement (131, 132, 133, 134) in seinem oberen Bereich mit der oberen Wand (101) des Anwendungshohlraums (100) in der unmittelbaren Nähe des Rands jeder Öffnung (151, 152, 153, 154) verschweißt ist.

7. Vorrichtung nach einem der Ansprüche 1 bis 6, dadurch gekennzeichnet, daß jedes Ablenkelement konzentrisch zu jeweils einem der Kolben ist.

8. Vorrichtung nach einem der Ansprüche 1 bis 7, dadurch gekennzeichnet, daß in der unteren Wand (103) des Anwendungshohlraums (100) ein rechteckiges Fenster (103') vorgesehen ist, welches für Mikrowellen durchlässig ist und über welches die Emission der Mikrowellen in das Innere des Anwendungshohlraums (100) erfolgt, wobei die Zentren der vier kreisförmigen Öffnungen (151, 152, 153, 154) des Anwendungshohlraums (100) paarweise auf verschiedenen Seiten des Fensters (103') entlang der größeren Seiten des letzteren angeordnet sind und jedes der Ablenkelemente (131, 132, 133, 134) einen Endabschnitt aufweist, welcher sich oberhalb der Oberfläche des Fensters (103') erstreckt.

## Claims

1. Apparatus for simultaneously treating in a wet medium four samples contained in four flasks (141, 142, 143, 144) having respective axes X₁, X₂, X₃, and X₄, the device comprising firstly means (200) for emitting microwaves inside an application cavity (100) having a central axis of symmetry X, the top wall (101) of the application cavity (100) including four openings (151, 152, 153, 154) through which the flasks (141, 142, 143, 144) are inserted parallel to the axis X into the inside of said cavity, the openings being disposed in symmetrical opposite pairs about the axis X, and also four microwave deflectors (131, 132, 133, 134) placed inside the application cavity (100), the device being characterized in that each deflector (131, 132, 133, 134) is formed by a cylindrical surface that surrounds a fraction of the outside surface of a flask (141, 142, 143, 144) where said fraction lies between one-fourth and one-half thereof, and in that the deflectors (131, 132, 133, 134) are disposed symmetrically in pairs about the axis X and are disposed for the most part on opposite sides of a plane (P₁, P₂) containing the axis X and the two axes of the corresponding flasks, the concave sides of the four deflectors (131, 132, 133, 134) facing in alternating directions.

2. A device according to claim 1, characterized in that each deflector (131, 132, 133, 134) extends over the entire height of the flask (141, 142, 143, 144) situated inside the application cavity.

3. A device according to claim 1 or 2, characterized in that each deflector (131, 132, 133, 134) is situated in the immediate vicinity of the flasks (141, 142, 143, 144) which it surrounds.

4. A device according to any one of claims 1 to 3, characterized in that it includes four protective glove fingers (121, 122, 123, 124) made of a material that is permeable to microwaves, each glove finger (121, 122, 123, 124) being designed to contain a respective flask (141, 142, 143, 144) and being inserted into the inside of the application cavity (100) via the corresponding opening (151, 152, 153, 154) in the top surface (101) thereof in such a manner that each deflector (131, 132, 133, 134) also surrounds the corresponding outside surface of each glove finger (121, 122, 123, 124).

5. A device according to any one of claims 1 to 8, in which each opening (151, 152, 153, 154) in the top surface (101) of the application cavity is provided with a well (110, 113) that is cylindrical in shape, that extends towards the outside of the cavity, and that includes a section equal to the through section of said opening, forming a microwave absorption barrier, the device being characterized in that each deflector (131, 132, 133, 134) is integrally formed with each well (111, 113) and constitutes an extension towards the inside of the application cavity of a fraction of the cylindrical side wall of each well.

6. A device according to any one of claims 1 to 4, characterized in that each deflector (131, 132, 133, 134) is bonded to the top of the top wall (101) of the application cavity (100) in the immediate proximity of the edge of each opening (151, 152, 153, 154).

7. A device according to any one of claims 1 to 6, characterized in that each deflector is concentric with each flask.

8. A device according to any one of claims 1 to 7, characterized in that a rectangular window (103') that is transparent to microwaves is provided in the bottom wall (103) of the application cavity whereby microwaves are emitted into the application cavity (100), the centers of the four circular openings (151, 152, 153, 154) of said application cavity (100) being positioned in pairs on opposite sides of the window (103') along the long sides thereof, and each of said deflectors (131, 132, 133, 134) includes an end portion which extends above the surface of said window (103').
